# EUROPÄISCHE PATENTANMELDUNG

(11) **EP 0 569 786 A1**
(43) Veröffentlichungstag der Anmeldung: **18.11.1993**
(21) Anmeldenummer: 93106956.1
(22) Anmeldetag: 29.04.1993
(51) Int. Cl.: B65B 35/24, B65B 35/04, B65G 47/64, B65G 47/51

(54) **Vorrichtung zum Zuführen von Packungen, insbesondere Beutelpackungen, zu einem Sammelpacker**

(30) Priorität: 14.05.1992 DE 4215642
(71) Anmelder: Focke & Co. (GmbH & Co.), D-27283 Verden (DE)
(72) Erfinder: Focke, Heinz, W-2810 Verden (DE); Heinzig, Wolfgang, W-2913 Apen (DE)
(74) Vertreter: Bolte, Erich, Dipl.-Ing.

(57) **Zusammenfassung**

2.1. Die Übergabe von Packungen (10), insbesondere Beutelpackungen mit empfindlichen Schüttgütern an einem Sammelpacker zur Einführung in einen Karton oder dergleichen ist schwierig, da die Packungen (10) nicht in einer längeren Reihe gestaut werden können. Andererseits sind unterschiedliche Leistungen einer Herstellmaschine (Beutelpacker) für die Packungen (10) und den Sammelpacker zu berücksichtigen. Zum Ausgleich dieser Unterschiede dient eine Fördervorrichtung (17) mit mindestens zwei Fördergurten (18, 19). Diese wirken als Ausgleichsförderer.

2.2. Die Packungen (10) werden durch die Fördervorrichtung (17) einer besonderen Sammelstation (16) zugeführt. Diese besteht aus einem Zwischenband (35) und einem Gruppenband (43). Im Bereich des Zwischenbandes (35) wird ein Abstand zwischen den Packungen (10) hergestellt zur Erkennung derselben. Im Bereich des Gruppenbandes (43) wird eine Packungsgruppe (11) aus dicht nebeneinander liegenden Packungen (10) gebildet.

## Beschreibung

Die Erfindung betrifft eine Vorrichtung zum Zuführen von Packungen, insbesondere Beutelpackungen, zu einem Sammelpacker (Kartonpacker) zum gruppen- bzw. lagenweisen Verpacken in Großbehältern (Kartons), wobei die Packungen einzeln nacheinander von einer Herstellmaschine, insbesondere einer Schlauchbeutelmaschine, zugeführt werden.

Thema der Erfindung ist die Handhabung von insbesondere Beutelpackungen mit druckempfindlichen Schüttgütern, wie Knabbererzeugnissen (Kartoffelchips) im Zusammenhang mit der Einführung derselben in Sammelpackungen, insbesondere Kartons. Für das Einfüllen derartiger Packungen in einen Karton ist eine Lösung vorgeschlagen worden in DE-A-40 22 120. Die Erfindung befaßt sich in erster Linie - wenn auch nicht ausschließlich - mit dem Transport von Packungen zu einer Karton-Verpackungsmaschine oder einer anderen Sammelstation für die Packungen.

Die Erfindung geht aus von der Erkenntnis, daß aufgrund der Druckempfindlichkeit der Packungen bzw. des Packungsinhalts ein Sammeln derselben als längere Staureihe nicht möglich ist. Gleichwohl ist es erforderlich, Gruppen von Packungen zu bilden, die einer Lage oder mindestens Teillage innerhalb des Kartons entsprechen.

Der Erfindung liegt demnach die Aufgabe zugrunde, ein Transportsystem für Packungen vorzuschlagen, welches bei hoher Leistungsfähigkeit eine schonende Behandlung der Packungen gewährleistet, gleichwohl aber die Bildung von Packungsgruppen ermöglicht.

Zur Lösung dieser Aufgabe ist die erfindungsgemäße Vorrichtung dadurch gekennzeichnet, daß die Packungen durch wenigstens zwei (endlose) Förderer zum Sammelpacker transportierbar sind, wobei die Förderer alternierend beschickbar und entleerbar sind.

Bei den Förderern handelt es sich erfindungsgemäß um zwei Fördergurte, die im Wechsel an einem Ende eines Fördertrums Packungen aufnehmen und am anderen Ende abgeben. Es wird deshalb bei der Erfindung jeweils der eine Gurt an einem Ende des Transportweges laufend mit Packungen beschickt, während zur gleichen Zeit der andere Fördergurt an dem gegenüberliegenden Ende des Förderwegs durch Abgabe von Packungen entleert wird.

Die Fördergurte für den Transport der Packungen können mit unterschiedlichen Fördergeschwindigkeiten angetrieben werden. Dadurch ist es möglich, die Packungen frei von Stauungen zu transportieren, obwohl zwischen der Herstellmaschine (Schlauchbeutelmaschine) und dem Sammelpacker ein exakter Synchronlauf nicht gegeben bzw. nicht erforderlich ist.

Gemäß einem weiteren Vorschlag der Erfindung sind die beiden Fördergurte an einem gemeinsamen Traggestell angeordnet, welches nach Maßgabe des Transportverlaufs bewegbar, insbesondere kippbar ist, um abwechselnd den einen und den anderen Fördergurt in die Beschickungs- oder Entleerungsstellung zu bewegen.

In besonderer Weise ist erfindungsgemäß eine auf der Abgabeseite an die Fördergurte anschließende Sammelstation ausgebildet. Diese besteht aus mindestens zwei aneinander anschließenden Bandförderern für die Packungen. Der erste Bandförderer nimmt die Packungen von den Fördergurten auf und bewirkt aufgrund entsprechender Relativgeschwindigkeit die Bildung von Abständen zwischen den Packungen (Zwischenband). Hieran schließt ein Gruppenband an, welches die dem Sammelpacker oder dergleichen zuzuführende Packungsgruppe bildet und positioniert.

Weitere Einzelheiten der Erfindung ergeben sich aus dem nachfolgend beschriebenen, in den Zeichnungen dargestellten Ausführungsbeispiel. Es zeigt:
- Fig. 1: Eine Vorrichtung zum Transport von Packungen in schematischer Seitenansicht,
- Fig. 2: die Vorrichtung gemäß Fig. 1 im Grundriß,
- Fig. 3 bis Fig. 6: eine Einzelheit der Vorrichtung, nämlich eine Sammelstation, in verschiedenen Phasen, in vergrößertem Maßstab.

Die als Ausführungsbeispiel gezeigte Vorrichtung dient zur Handhabung von Packungen 10, die von einer Herstellmaschine, insbesondere einer Schlauchbeutelmaschine, zugeführt und aus denen für die Einführung in Großbehälter, insbesondere Kartons, Packungsgruppen 11, gebildet werden. Bei den Packungen 10 handelt es sich vorzugsweise um Beutelpackungen mit druckempfindlichen Schüttgütern, wie Kartoffelchips.

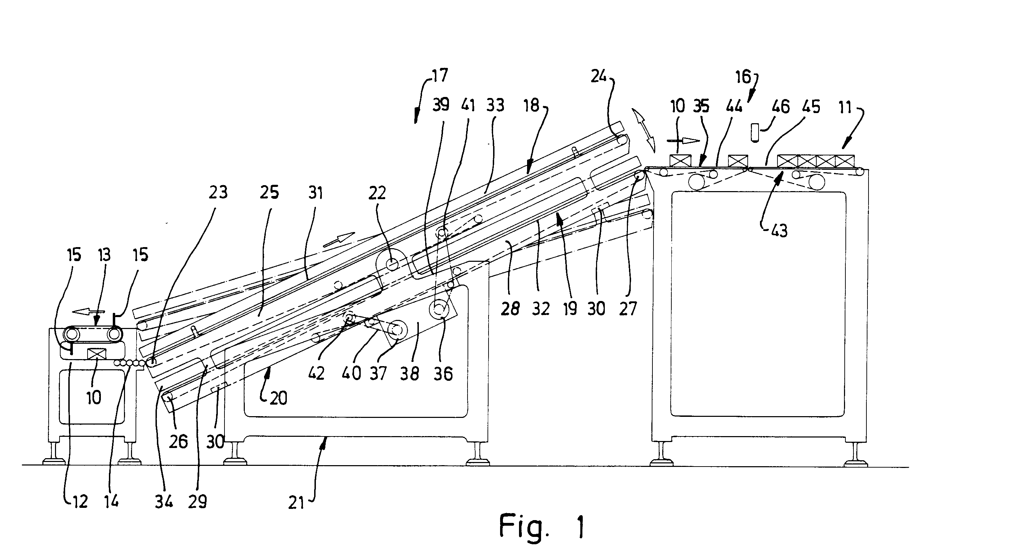

Die von der Herstellmaschine kommenden Packungen 10 werden nacheinander auf einem Packungsförderer 12 angeliefert, der sich bei der Darstellung in Fig. 1 senkrecht zur Darstellungsebene erstreckt. Die Packungen 10 werden von diesem Packungsförderer 12 durch einen Querförderer 13 in Querrichtung abgeräumt und auf einen Anschlußförderer gegeben, nämlich einen Rollenförderer 14. Der Querförderer 13 ist hier als endloser Gurt ausgebildet, an dem Mitnehmer 15 zum Erfassen jeweils einer Packung angeordnet sind.

Die Packungen 10 werden entsprechend der Leistung der Schlauchbeutelmaschine fortlaufend mit Abständen voneinander auf dem Packungsförderer 12 angeliefert. Zuweilen können Lücken bzw. größere Abstände auftreten, z. B. bei ausgesonderten Fehlpackungen. Es geht nun darum, die Packungen 10 einer Sammelstation 16 zur Bildung der Packungsgruppen 11 zuzuführen. Dabei sollen Unterschiede zwischen der Zufuhr der Packungen 10 und der von der Leistung des Sammelpackers abhängigen Abförderung von der Sammelstation 16 ausgeglichen werden, ohne daß es dabei zu Anstauungen von Packungsreihen kommt.

Zwischen dem Packungsförderer 12 und der Sammelstation 16 ist eine in besonderer Weise ausgebildete Fördervorrichtung 17 angeordnet. Diese ist so ausgebildet, daß sie Unterschiede zwischen der Zuführung und Abförderung von Packungen 10 auszugleichen vermag.

Die Fördervorrichtung 17 weist zu diesem Zweck zwei Förderer auf, nämlich Fördergurte 18 und 19. Diese werden von einem gemeinsamen Traggestell 20 gehalten. Das Traggestell 20 ruht auf einem Maschinengestell 21. Das Traggestell 20 ist mit den Fördergurten 18, 19 als Einheit relativ zum Maschinengestell 21 bewegbar, nämlich in einer vertikalen Ebene kippbar. Zu diesem Zweck ist das Traggestell 20 in einem (etwa) mittigen Drehlager 22 mit dem Maschinengestell 21 verbunden.

Die Fördergurte 18, 19 sind im bzw. am Traggestell 20 übereinander liegend angeordnet. Umlenkrollen 23, 24 des oberen Fördergurts 18 werden von oberen seitlichen Tragstreben 25 gehalten. Umlenkrollen 26, 27 des unteren Fördergurts 19 sind an seitlichen Tragstreben 28 befestigt. Die Tragstreben 25 und 28 sind durch aufrechte Stege 29 und Querträger 30 miteinander verbunden.

Die Packungen 10 werden über den horizontalen Rollenförderer 14 alternativ an den einen oder anderen Fördergurt 18, 19 übergeben. Ein oberer Fördertrum 31, 32 derselben transportiert die Packungen 10 zur Sammelstation 16. Dem Fördertrum 31 und 32 sind Seitenführungen 33, 34 zugeordnet.

Durch Verschwenken des Traggestells 20 werden die Fördergurte 18, 19 abwechselnd in eine Aufnahmeposition und eine Abgabeposition für Packungen 10 gebracht. Bei der Darstellung in Fig. 1 befindet sich der obere Fördergurt 18 in der Aufnahmestellung. Die Umlenkrolle 23 ist benachbart zum Rollenförderer 14 angeordnet. Die Packungen 10 werden von diesem Rollenförderer 14 an den Fördertrum 31 des Fördergurts 18 übergeben.

Auf der gegenüberliegenden Seite der Fördervorrichtung 17 ist gleichzeitig die Anordnung so getroffen, daß der untere Fördergurt 19 an die Sammelstation 16 anschließt. Die Umlenkrolle 27 für den Fördertrum 32 ist unmittelbar benachbart zu einem Förderer der Sammelstation 16, nämlich einem als Bandförderer ausgebildeten Zwischenband 35. Dies bedeutet, daß der obere Fördergurt 18 lediglich Packungen 10 aufnimmt, während der untere Fördergurt 19 ausschließlich Packungen 10 abgibt.

Die Anordnung ist so getroffen, daß die Fördervorrichtung 17 ein Schrägförderer ist. Die Fördergurte 18, 19 sind unter einem spitzen Winkel gerichtet, derart, daß die Fördertrums 31, 32 in Aufwärtsrichtung fördern. Die Sammelstation 16 befindet sich auf einem deutlich höherem Niveau als der Packungsförderer 12. Das Traggestell 20 ist durch ein Stellorgan, z.B. einen Druckmittelzylinder, zwischen der in Fig. 1 in ausgezogenen Linien und der strichpunktiert dargestellten Position bewegbar, durch Schwenken im Uhrzeigersinn und im gegen Uhrzeigersinn.

Jeder Fördergurt 18, 19 ist eigenständig angetrieben, und zwar mit einer nach Maßgabe der Zuförderung und Abgabe von Packungen 10 einstellbaren Geschwindigkeit. Jedem Fördergurt 18, 19 ist ein Antriebsmotor 36, 37 zugeordnet. Die beiden Antriebsmotore 36, 37 sind hier an einem gemeinsamen, mit dem Traggestell 20 verbundenen Halter 38 angebracht. Die Antriebsmotoren 36, 37 wirken über Antriebsriemen 39, 40 (Zahnriemen) auf Antriebswalzen 41, 42 der Fördergurte 18, 19.

In besonderer Weise ist auch die Sammelstation 16 ausgebildet. An das Zwischenband 35 schließt unmittelbar ein Gruppenband 43 an. Fördertrums 44 und 45 von Zwischenband 35 und Gruppenband 43 verlaufen horizontal und schließen aneinander an. Zwischenband 35 und Gruppenband 43 sind unabhängig voneinander und mit unterschiedlichen Fördergeschwindigkeiten antreibbar.

Die insoweit beschriebene Vorrichtung arbeitet wie folgt:
Die ankommenden Packungen 10 werden bei der in Fig. 1 gezeigten Position nacheinander auf den Fördergurt 18 gegeben. Dieser wird dabei mit einer solchen Geschwindigkeit fortlaufend angetrieben, daß die Packungen 10 in Dichtlage oder auch mit geringen Abständen voneinander auf dem Fördertrum 31 in Aufwärtsrichtung transportiert werden. Während dieser Zeit werden auf dem unteren Fördergurt 19 gesammelte Packungen 10 durch entsprechende Transportbewegung des Fördergurts 19 der Sammelstation 16, nämlich dem Zwischenband 35 zugeführt. Der sich jeweils in dieser Entleerungsposition befindende Fördergurt - Fördergurt 19 in Fig. 1 - wird mit etwas höherer Geschwindigkeit angetrieben als der andere, sich in der Beladestellung befindende Fördergurt 18.

Nach Leerfahren des Fördergurts 19 wird das Traggestell 20 im Uhrzeigersinn geschwenkt, derart, daß der untere, leergefahrene Fördergurt 19 in die Beschickungsposition gelangt. Der Fördertrum 32 schließt hierbei an den Rollenförderer 14 an. Zugleich ist der obere Fördergurt 18 in die Entleerungsstellung gelangt, in der der Fördertrum 31 an das Zwischenband 35 anschließt. Der obere Fördergurt 18 wird nun bei entsprechend höherer Antriebsgeschwindigkeit leergefahren. Dabei kann die Anordnung so getroffen sein, daß die gefüllten Fördergurte 18, 19 jeweils nicht bis zur Umlenkrolle 24 bzw. 27 mit Packungen 10 belegt sind, sondern nur in einem Teilbereich.

Das Zwischenband 35 hat die Aufgabe, die überwiegend in Dichtlage ankommenden Packungen 10 in einen Abstand voneinander zu bringen. Dieser kann beispielsweise 2 bis 3 cm betragen. Das Zwischenband 35 wird deshalb mit entsprechend höherer Geschwindigkeit angetrieben als der angeschlossene Fördergurt 18, 19.

Der Abstand zwischen den Packungen 10 im Bereich des Zwischenbandes 35 ist erforderlich, damit die Packungen 10 durch ein Tastorgan, im vorliegenden Falle durch einen optoelektrischen Sensor 46 erkannt und gezählt werden können.

Das anschließende Gruppenband 43 ist mit geringerer Fördergeschwindigkeit angetrieben bzw. steht zeitweilig still.

Zunächst wird durch entsprechende taktweise Förderbewegung des Gruppenbandes 43 eine der Packungsgruppe 11 (Packungslage) entsprechende Anzahl von Packungen 10 vom Zwischenband 35 übernommen.

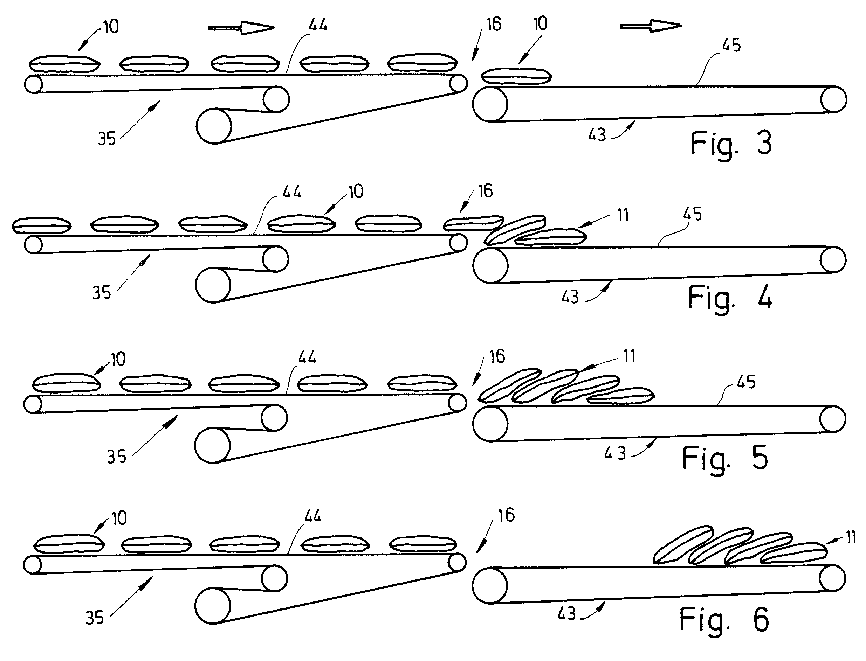

Die einzelnen Phasen bei der Bildung der Packungsgruppe 11 auf dem Gruppenband 43 sind in Fig. 3 bis Fig. 6 dargestellt. Für eine problemlose Übergabe der Packungen 10 vom Zwischenband 35 zum Gruppenband 43 ist letzteres geringfügig tieferliegend angeordnet als das Zwischenband 35. Der Fördertrum 45 des Gruppenbandes 43 ist gegenüber dem Fördertrum 44 nach unten versetzt.

Die Packungen 10 können auf dem Gruppenband 43 bzw. innerhalb der Packungsgruppe 11 unterschiedliche Formationen annehmen, z.B. in Dichtlage, auf Abstand oder "schuppenartig" angeordnet sein, wie bei Fig. 3 bis Fig. 6. Diese Formation der Packungen 10 ergibt sich aus der Relativgeschwindigkeit des Gruppenbandes 43 gegenüber dem Zwischenband 35. Das Gruppenband 43 wird taktweise angetrieben entsprechend der Aufnahme von Packungen 10.

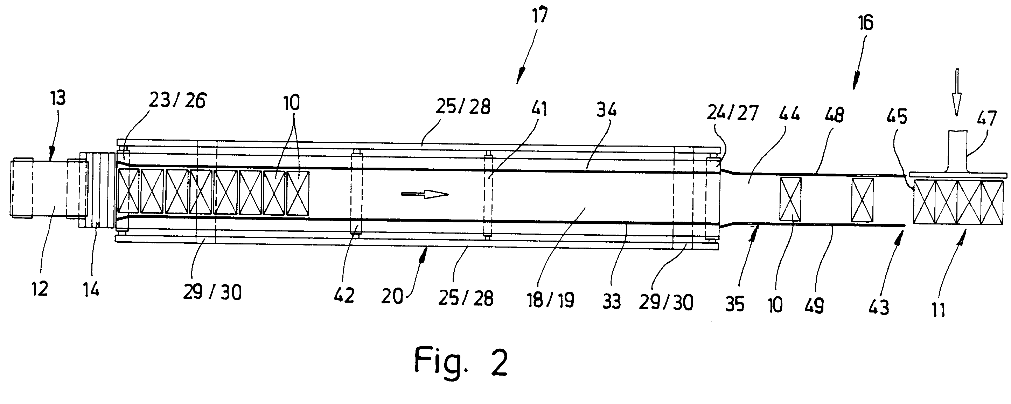

Sobald die Packungsgruppe 11 komplettiert ist, wird diese durch entsprechende Beschleunigung des Gruppenbandes 43 in eine exakte Abschubposition transportiert (Darstellung in Fig. 1 und Fig. 2). In dieser wird die komplette Packungsgruppe 11 durch einen Schieber 47 in Querrichtung abgefördert.

Zwischenband 35 und Gruppenband 43 sind durch gemeinsame Seitenführungen 48, 49 begrenzt.

Die gezeigte Vorrichtung ist besonders geeignet für Beutelpackungen. Dieses werden im Bereich der Fördervorrichtung 17 mit ihrer Längserstreckung quer zur Förderrichtung transportiert. Die Breite der Packungen 10 in Förderrichtung kann 10 bis 25 cm betragen. Die Fördergurte 18, 19 werden mit einer Geschwindigkeit zwischen 12 und 20 m/min angetrieben. Die Fördervorrichtung 17 kann eine Länge von z.B. 3 m aufweisen. Auf einem gefüllten Fördergurt 18, 19 können sich 12 bis 30 Packungen 10 befinden. Bei einer Gesamtleistung von beispielsweise 120 Packungen 10 pro Minute wird demnach die Fördervorrichtung 17 in Abständen von einigen Sekunden umgeschaltet.

## Patentansprüche

1. Vorrichtung zum Zuführen von Packungen (10), insbesondere Beutelpackungen, zu einem Sammelpacker (Kartonpacker) zum gruppen- bzw. lagenweisen Verpacken in Großbehälter (Kartons), wobei die Packungen (10) einzeln nacheinander von einer Herstellmaschine, insbesondere einer Schlauchbeutelmaschine, zugeführt werden, **dadurch gekennzeichnet, daß** die Packungen (10) durch wenigstens zwei Förderer zum Sammelpacker transportierbar sind, wobei die Förderer alternierend mit Packungen (10) beschickbar und entleerbar sind.

2. Vorrichtung nach Anspruch 1, dadurch gekennzeichnet, daß die Packungen (10) durch zwei Fördergurte (18, 19) transportierbar sind, die im Wechsel an einem Ende eines Fördertrums (31, 32) Packungen (10) aufnehmen (Füllstellung) und am anderen Ende abgeben (Entleerungsstellung).

3. Vorrichtung nach Anspruch 1 oder 2, dadurch gekennzeichnet, daß die Fördergurte (18, 19) in der Füllstellung an einen Zuförderer für die Packungen (10) anschließen, insbesondere an einen Rollenförderer (14).

4. Vorrichtung nach Anspruch 1 oder 2, dadurch gekennzeichnet, daß die Fördergurte (18, 19) in der Entleerungsstellung an eine Sammelstation (16) zur Bildung von Lagen- bzw. Packungsgruppen (11) anschließen.

5. Vorrichtung nach Anspruch 2, dadurch gekennzeichnet, daß die Fördergurte (18, 19) an einem gemeinsamen Traggestell (20) übereinanderliegend angeordnet sind, welches bewegbar, insbesondere schwenkbar gelagert ist zur Bewegung der Fördergurte (18, 19) alternativ in die Füllstellung und Entleerungsstellung.

6. Vorrichtung nach Anspruch 2, dadurch gekennzeichnet, daß die Fördergurte (18, 19) jeweils in der Entleerungsstellung mit höherer Fördergeschwindigkeit angetrieben sind als in der Füllstellung.

7. Vorrichtung nach Anspruch 5 oder einem der weiteren Ansprüche, dadurch gekennzeichnet, daß die Fördergurte (18) bzw. (19) bzw. das Traggestell (20) um ein etwa mittig angeordnetes Drehlager (20) kippbar sind bzw. ist.

8. Vorrichtung nach Anspruch 2 oder einem der weiteren Ansprüche, dadurch gekennzeichnet, daß die Fördergurte (18, 19) schräg gerichtet sind, derart, daß deren Fördertrum (31, 32) in Förderrichtung unter einem spitzen Winkel ansteigt.

9. Vorrichtung nach Anspruch 1 oder einem der weiteren Ansprüche, dadurch gekennzeichnet, daß an den sich jeweils in der Entleerungsstellung befindenden Förderer bzw. Fördergurt (18, 19) ein Zwischenband (35) als Teil der Sammelstation (16) anschließt, wobei das Zwischenband (35) mit höherer Geschwindigkeit angetrieben ist als der jeweils zugeordnete Fördergurt (18, 19), derart, daß die Packungen (10) im Bereich des Zwischenbandes (35) einen Abstand voneinander erhalten.

10. Vorrichtung nach Anspruch 9, dadurch gekennzeichnet, daß im Bereich des Sammelstation (16) an das Zwischenband (35) ein Gruppenband (43) anschließt, welches ungleichförmig angetrieben ist, derart, daß die vom Zwischenband (35) zugeführten Packungen (10) in Dichtlage bis zur Bildung einer Packungsgruppe 11 aufnehmbar sind.

11. Vorrichtung nach Anspruch 10, dadurch gekennzeichnet, daß die auf dem Gruppenband (43) gebildete Packungsgruppe (11) durch das Gruppenband (43) in eine Abschubstellung für die Packungsgruppe (11) förderbar ist.
